# EUROPEAN PATENT APPLICATION

(11) **EP 1 708 528 A1**
(43) Date of publication of application: **04.10.2006**
(21) Application number: 05252023.6
(22) Date of filing: 31.03.2005
(51) Int. Cl.: H04Q 7/38, H04L 12/28, H04L 29/06

(54) **Location based authentication**

(71) Applicant: BRITISH TELECOMMUNICATIONS public limited company, London EC1A 7AJ (GB)
(72) Inventor: The designation of the inventor has not yet been filed
(74) Representative: Lofting, Coreena Fiona Anne

(57) **Abstract**

The present invention relates to authenticating a mobile device (10) using location information associated with the device. The present invention provides a mechanism for authenticating a mobile device based on location related information or a "logical location", but without requiring an actual location. The mobile user device (10) gathers tokens (3) such as SIM data from other wireless devices using wireless communication between the user device and the other devices (13). A server (11) determines whether these tokens match predetermined reference information, and if so authenticates the user device.

## Description

### Field of the Invention

The present invention relates to authenticating a mobile device using location information associated with the device.

### Background

In order for a server to provide a mobile device with resources such as access to a locally stored document or the Internet, the server usually requires the device to be authenticated. This typically takes the form of the user of the device entering a username and password in response to an authentication challenge from the server, following a request for resources by the mobile device. These authentication signals are often encrypted when provided over a wireless channel for additional security.

However with the increasing use of wireless devices in gaining access to central system resources such as work or corporate documents and communications, it has become burdensome for the user to continually enter their password and user name each time access for some application is required. Furthermore, the user interface on many mobile devices is limited, making the authentication process time consuming and difficult for the user. This problem may be exacerbated where the level of authentication required is increased and the user is asked for more credentials such as date of birth and mother's maiden name.

One solution to this problem is using a location based authentication mechanism. This relies on the idea that if the mobile device is in a restricted area, eg the work place, then the device is unlikely to have been stolen and normal authentication requirements can be relaxed. If however the device is away from the office, for example at the user's home, then the usual username and password authentication is required. Such an arrangement is described in WO04/095857; however this arrangement requires complex additional systems to be installed in the mobile device, for example GPS positioning, adaptive antenna arrays and/or multi-path fingerprinting in order to confirm the mobile's location within the office building or other "low authentication requirements" area. Such additional systems are expensive, and often not available on standard or low cost mobile devices.

### Summary of the Invention

In general terms in one aspect the present invention provides a mechanism for authenticating a mobile device based on location related information or a "logical location", but without requiring an actual location. This provides a convenient method of authentication which is simple to implement, and in an embodiment can be implemented using existing mobile device hardware. Authentication may be required at the work place for example, before a workers mobile device can access work-related documents or resources such as Internet access.

The mobile user device obtains predetermined information from other devices, for example wireless devices, within its vicinity and forwards this information to the authenticating authority. For example the user device may attempt to gather tokens from other company mobile devices within range, the tokens being predetermined information associated with the other devices, for example their SIM data or a unique company network authentication number. If this information matches predetermined information available to the server, then the device is authenticated by the server. The stored server-side information may be a list of SIM data of company devices or the authentication numbers given to company devices currently accessing the company network.

This method of authentication utilises the logical location of the requesting user device based on its proximity to other wireless devices, to assume that the device is in a safe location, such as company premises. This enables the relaxation of usual authentication requirements, relieving the user of having to enter username and password (or other) credentials.

A mobile wireless user device may query other wireless devices from its users work desk, the vicinity of the user's desk being populated by other company devices. The user device then requests tokens from a number of these other devices. The tokens may be a special number associated with the company network, such as a current authentication number provided by the company network server to each authenticated device, or it could be simply the other device's MAC address, SIM data or some other identifying information. In a further alternative, each company device may hold or store a common company identifier such as an encrypted number. These tokens (or identifiers) are then forwarded to the company server in response to an authentication challenge. The server retains a list or has access to information about devices that may be authenticated to access the company network resources. This information may include each devices MAC address, SIM data or a unique company asset register number.

If the tokens sent by the user device match identifiers for other company devices, then this supports an assumption that the device is located within company premises, or at least within a cluster of other company machines. This is unlikely to be the case if the device had been stolen for example, and therefore the level of authentication required can be relaxed from the stricter username and password requirements, to using this logical location based authentication. This authentication may be further supported if the tokens relate to other company devices all requesting the same company network resource, for example setting up the same conference call or downloading the same document.

The token information or identifier may alternatively or additionally include a dynamic identifier such as a current session authentication number indicating the device is currently using, and is authenticated to use, the company network. This information gives additional support to the assumption that this device is located within company premises, or in a cluster of other company devices.

In an example the user device gathers 5 tokens from nearby wireless devices, using WiFi connections. In a simple configuration, only MAC addresses are obtained and in this case 3 MAC addresses are gathered from other company device and 2 MAC addresses from non-company devices; the user device being located outside the company premises. The 5 tokens are forwarded to the company server, which recognises 3 of them, and requiring a minimum of 3 matching tokens, authenticates the device. A higher level of security can be obtained by configuring each company device with the means to forward its unique company identifier such as an asset register number upon a suitable request from another company device (eg the requesting user device). Alternatively or additionally, the authenticating server may require that the matching tokens are from company devices that require the same company network resource, for example a conference call.

Thus the user is saved the inconvenience of having to enter username and password details (or other credentials) each time they wish to be authenticated at work or some other "safe" location. This makes the authentication process more useable, faster, and less prone to user error, such as inaccurate data entry.

In an embodiment the user device identifies the other devices using wireless access technologies such as WLAN air interface protocols for example IEEE802.11a (WiFi), personal area network air interface protocols such as Bluetooth™, however other wireless protocols could also be used. Preferably at least one medium to short range wireless access technology is used in order to "locate" the user device to within a predetermined range. For example a WiFi WLAN normally provides coverage over approximately a 100m radius (medium range), and a Bluetooth piconet is typically restricted to a range of approximately 10m (short range). More preferably at least one short range wireless access technology (eg Bluetooth) is used.

As an alternative, the level of authentication granted may depend on the wireless access technology(s) used. For example, access to a top secret company document may only be granted when a matching Bluetooth identifier(s) is given (indicating the user is more likely to be within 10m of the token providing other device). Whereas access to the company Intranet may be granted even if only WiFi discovered identifiers or tokens are matched (indicating the user is likely within 100m of the token providing other device). If only a GSM cell identifier is provided, then only very limited (or no) access to company resources may be given.

In particular in one aspect there is provided a method of authenticating a wireless user device, for example by a server in response to the user device requesting a company document over the company WLAN. The method comprises gathering tokens from a number of other wireless devices using wireless communication between the user device and the other devices, determining whether the tokens match a number of predetermined authentication tokens. For example the tokens may contain SIM information or other identifiers which the server can use to determine whether the tokens have come from other company devices. If this is the case, the user device is authenticated.

The wireless communication may comprise using one or more wireless access technologies to directly communicate with one or more of the other devices in order to obtain the respective token. The wireless access technologies can be used to communicate with the other devices having the wireless access technology capability within the respective ranges of the user device. For example the user device may obtain a token from all the Bluetooth devices in range, and if say 3 of these are company devices, then the user device is authenticated.

The tokens can comprise any information relating to its respective other device, for example a MAC address; SIM data; a unique group (eg company) identifier for the other device or group; or an authentication number for the company wireless network it is using.

The authentication information may comprise a list of approved other devices, for example all company wireless devices, or in a more tightly defined group only those company devices which are currently authenticated on the companies WLAN. The level of authentication given to the user device may depend on different groups of authorised tokens or token data which the tokens sent by the user device can be matched against.

In another example the authentication information may comprise a grouping of company device identifiers corresponding to devices requesting or using the same service requested by the user device.

In a further example the authentication information may comprise a group of (eg company) devices using the same (eg company) wireless network used by the user device to communicate with the server, and/or deliver the requested service.

The term wireless access technology is used to refer to any suitable communications protocol using electromagnetic radiation (EMR) as a medium. This will include radio frequencies as well as free-space optics for example (eg infra-red). Different versions of a base or generic standard are considered for the purposes of this specification as different wireless access technologies, thus for example IEEE802.11a and IEEE802.11b represent different wireless access technologies, even though they are both known generically as WiFi.

For the sake of simplicity of explanation however, the term WiFi is used in the detailed description to refer to any one of the various IEEE802.11 protocol standards.

In an embodiment the wireless access technologies are used to directly (ie without using an intermediate node) communicate with one or more of the other devices. This may include communicating with an access point of a WiFi WLAN say in order to identify the other members of the WLAN without actually directly communicating with these other WLAN members.

In another aspect there is provided a method of authenticating a wireless user device suitable for use by the requesting user device. The method comprises receiving an authentication challenge from a server; gathering tokens from other wireless devices using wireless communication with the other devices; and forwarding the tokens to the server in response to the challenge.

In another aspect there is provided a method of authenticating a wireless user device suitable for use by a server receiving an authentication request from a user device. The method comprises sending an authentication challenge to the user device; receiving tokens corresponding to other wireless devices from the user device in response to the challenge. The method further comprises determining whether information contained in a predetermined number of the tokens corresponds to predetermined authentication information, and if so authenticating the user device.

There is also provided a method of authenticating a wireless user device, the method comprising gathering tokens from a number of other wireless devices using wireless communication between the user device and the other devices, and determining whether the gathered tokens match tokens or a predetermined number of tokens for an authentication group of other devices, and if so authenticating the user device. The authentication group may comprise company devices, perhaps including the user device, or it may comprise devices currently authenticated to use a company wireless network, or devices currently authorised to use the same service requested by the user device in requesting authentication.

There are also provided various apparatus such as server and client nodes, networks and systems or parts thereof corresponding to the above defined methods.

### Description of the Drawings

Embodiments will now be described by reference to the following drawings, by way of example only and without intending to be limiting, in which:
Figure 1 illustrates a known authentication method;
Figure 2 illustrates an authentication method according to an embodiment; and
Figure 3 is a flow chart showing operation of a system according to an embodiment.

### Detailed Description

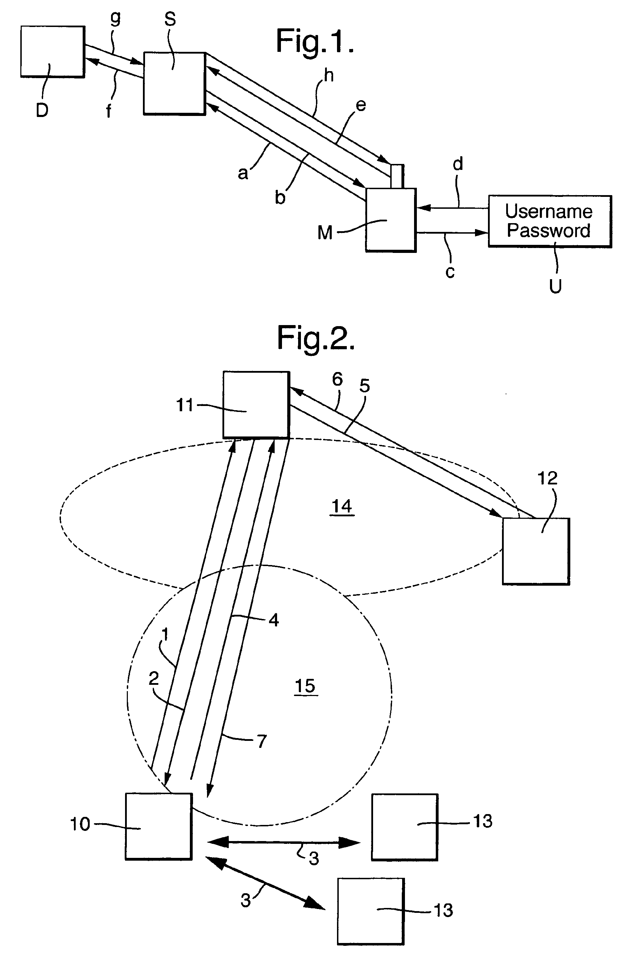

Figure 1 shows a well known means of authenticating a mobile device such as a laptop computer or PDA with wireless access to a company network. The mobile device M sends a request (operation step a) to a company server S in order to access a company document D. The request may be sent using a wireless connection, for example a WiFi link. The server S challenges (b) the mobile device M to provide suitable authentication data. The mobile device M then requires (c) a user U to enter their company username and password into the device (d). This data is passed back (e) to the server S in response to the challenge. The server then checks whether the supplied password and username are valid, and if so carries out the mobile device's request and obtains (f and g) the requested company document D. The mobile device having been authenticated, the document D is then forwarded (h) to the mobile device M by the server S.

This authentication process is typically required for each application on the mobile device which requires access to the company resources. For example in addition to accessing document D via a word processing application, the device may also require access to an email server via an email client, the internet via a browser, and a database via a suitable database application. Thus each time these resources are requested by the mobile device M, the user has to re-enter their username and password. In some cases the resources may require different usernames and passwords, further taxing the user.

A system according to an embodiment is illustrated in figure 2, and comprises a wireless user device 10 such as a Smart-phone, a document server 11, a database 12 coupled to the document server over a company network 14 and holding authentication or other information related to wireless devices associated with the company wireless IP network 15, and a number of wireless devices 13 located about the user device. The user device 10, other wireless devices 13, and document server 11 communicate with each other wirelessly, for example over a WLAN 15 such as IEEE802.11a (WiFi), Bluetooth™ or some other wireless communications technology.

Instead of supplying a username and password for authentication by the document server or authentication authority 11, the user device 10 identifies other wireless devices 13 located around it gathers tokens from some or all of these and forwards the tokens to the server 11. The other devices 13 might be work related devices such as WLAN base stations or access points, wireless printers and other computer peripheral equipment, other WLAN mobile stations, and other worker's mobile phones. These devices may be fixed such as company network access points, or they may be mobile such as co-workers mobile phones. The devices other 13 could also be non-company related devices

The identifiers or tokens gathered from the other devices could be simply their MAC addresses or some other data with which to uniquely identify them or identify them as company related devices. Examples include SIM data, a company asset register number, a company wireless IP network 15 authentication number, or a dynamically allocated IP address for use on the company network 14.

The token gathering from the other devices 13 is performed using one or more wireless access technologies available to the user device 10. The actual mechanics of obtaining or discovering a suitable token (eg a MAC address) will depend on the wireless protocol used as will be apparent to those skilled in the art, but may comprise simply querying the other devices or requesting a connection with the other devices in order to discover their identities for example.

The tokens gathered by the user device 10 provides the device with a logical location as identified by the presence of neighbouring devices. This can be implemented as a list of device 13 tokens such as their MAC addresses or company asset register number. The device 10 may be configured to exhaustively identify all other mobile devices 13 it can using its available wireless access technologies (ie all those within range of each technology), or a sub-set of these devices 13 such as the first 3 from each access technology. Similarly the user device 10 may be configured to use any number of its available wireless access technologies.

In one arrangement the user device 10 may determine whether the gathered token is company related, for example a company asset register number matching a predetermined format is provided, before forwarding this to the server. The user device 10 may be configured to "know" that it must gather 3 such company related tokens, and can then stop.

Once the tokens from other wireless devices 13 in the vicinity have been gathered, the user device 10 sends these to the server 11 as a response to the authentication challenge issued by the server 11. The identities information or authentication response can then be correlated with the physical location of other company devices 13, for example within company premises. Thus the response providesphysical location information about the user device 10, based on its presence relative to other devices 13.

The server 11 then either forwards the received tokens to a database 12 for matching with a list of authentication tokens such as company device identifiers, or requests a list of company devices identifiers (a company asset register for wireless devices) and performs the comparison itself. If the required number of received or gathered tokens (eg 3 company devices identifiers) are matched with tokens in the authentication or database list of tokens, then the user device is authenticated, and may receive the document. 1.

In a further alternative, in addition to requiring a number of matching tokens to set up a secure session with the server, the server 11 may be configured to periodically require the user device 10 to supply tokens. If the tokens change or a sufficient number of company related tokens can't be provided then the secure session is terminated.

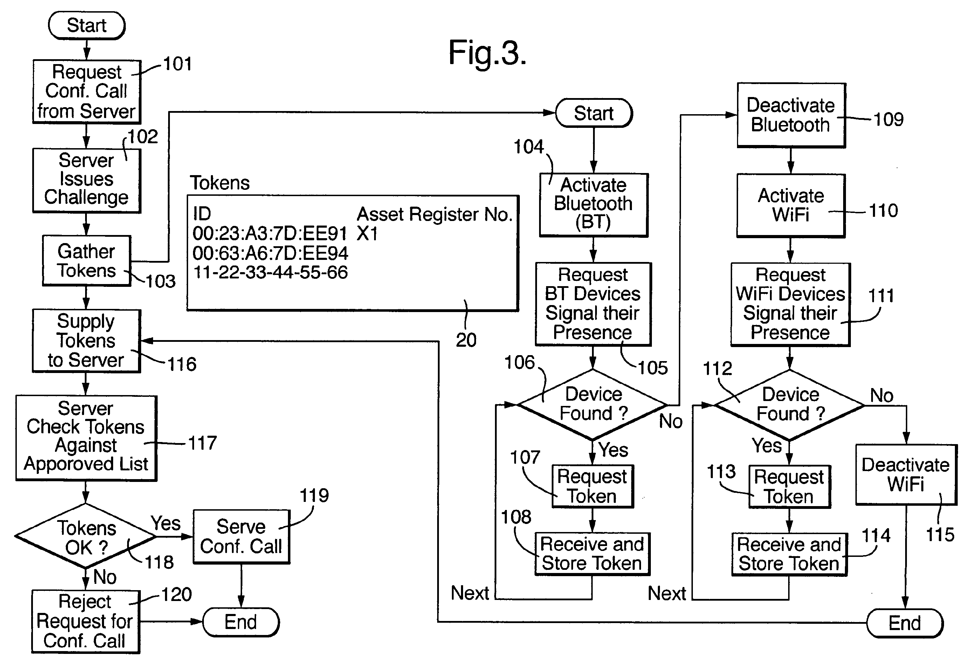

Figure 3 is a flow chart of a method according to an embodiment. Referring also to the signalling references in figure 2, the user device 10 requests a voice conference be set up (or other resource) from the server 11 (step 101 of figure 3; signal flow 1 of figure 2). The server 11 responds by issuing an authentication challenge (102; 2). This prompts the user device 10 to gather tokens from surrounding wireless devices (3; 103).

To do this, the device 10 enables a number of its available wireless technologies or protocols, in this example Bluetooth and WiFi (104, 110; 3). Other wireless technologies which could be used include: GSM, WiMax (IEEE802.16), 3G (CDMA2000/WCDMA), DSRC (Dedicated Short Range Communication) - a high speed vehicle based 100-1000m range wireless standard, DECT (Digital Enhanced Cordless Telecommunications) - a short range wireless standard. Wireless access technologies which can directly communicate with other devices (eg Bluetooth and WiFi) are preferred, but protocols using an intermediate node such as a GSM base station could also be used. Alternatively such intermediate node wireless access technologies could be used simply to provide part of the identifier for the other device, for example its GSM cell ID.

It is possible to obtain a token(s) using only a single technology, however two or more such technologies or air interface protocols can also be used. Some wireless access technologies (eg WiFi) can operate over a large area (eg a building or 100m radius) which reduces the security of the system, whereas other short range technologies (eg Bluetooth) operate over a much shorter range such as 10m. Therefore it is preferred that at least one short range air interface protocol is used.

To gather tokens to add to a token list (20), first Bluetooth is activated (104), and the user device 10 requests that other Bluetooth devices within range signal themselves (105). This may be done by using Bluetooth's SDP (Service Discovery Protocol). This is invoked by Bluetooth terminals to discover other Bluetooth terminals in it's neighbourhood. Once invoked, the user device SDP gathers other device's addresses and supported services as is known. This data is made available to applications on the user's device using an API (application programmers interface), and can therefore be gathered and the Bluetooth address for each other device 13 added to the list (106, 107, 108). If no, or no more devices 13 are found, the user device 10 deactivates its Bluetooth capability (109).

Whilst in one embodiment the device may be simply configured to gather the MAC addresses of the other devices in order to form the tokens, the user device 10 may be further or alternatively configured to obtain certain other information from each other device 13, for example its SIM data or company specific information such as an asset register or company network authentication number. This may require each company device (10 and 13) to be enabled to provide this service, for example through a special user application interfacing with the Bluetooth API as will be appreciated by those skilled in the art. Alternatively standard Bluetooth SDP routines may be implemented for certain types of token information as will be appreciated by those skilled in the art. All of the data gathered about each other device is then grouped together to form the token from that device.

In another alternative arrangement, the device may be configured to stop the token gathering process once a predetermined number of tokens (or company tokens) have been obtained. If the predetermined number of tokens relates to company tokens, this may be achieved simply by requesting the information which only other company devices would have or can provided, for example through a special company based software module.

The device 10 then activates its WiFi capability (110). The user device 10 then requests other WiFi devices to signal their presence (111). This can be achieved in a number of ways, for example by listening for the beacon frame from access points within range in centralised WLAN's, or a "probe request" can be sent by the device to ask an AP (access point) for details about itself (eg its MAC address). A passive RF scanning technique can also be used by eaves dropping other traffic in the WLAN. Whilst payloads are encrypted, headers are not and so it is possible to get identity information this way. One or all of these methods may be used.

If a device is found (112), then its MAC address or other token is sought (113). This may be achieved in a number of ways as would be known to those skilled in the art, and will also depend on whether a centralised or ad hoc wireless network is involved. For example, the user device 10 may attempt to join an active BSS supported by one of the access points, and this may require knowledge of a key. However if this is related to a BSS provided about the workplace, then this key may already be stored by the device 10. Once the device 10 has been authenticated, it then associates with the other stations of the BSS in order to obtain their tokens. This might simply involve discovering their MAC addresses, or may require querying application layer information such as an asset register number or other data. Once all of the devices that signalled their presence have been queried, including if necessary the authentication and association process in order to query mobile stations associated with a presence signalling access point, then the user device 10 deactivates its WiFi capability (115).

The gathered device tokens are added (114) to a token list 20. This may simply comprise a MAC address and its associated asset register number, or more simply the MAC address of each device.

The list may simply be a plain text file including the data in alpha-numeric form. Preferably this is encrypted for transmission to the server. This may be accomplished by opening a secure http session with the server 11 for example.

Once the identifier list or tokens 20 have been created, this is forwarded to the server (116; 4). The server 11 makes a request (117; 5) to a database 12 for the MAC addresses, asset register numbers or other corresponding data (ie the reference or authentication tokens) for all company wireless devices. The database 12 supplies these (117; 6) to the server 11 which searches the stored list of company device identifiers with the recently supplied tokens 20. If a predetermined number of matches are made (118), for example 3 MAC address from the database 12 are the same as 3 MAC addresses sent as tokens by the requesting user device 10, then the device is authenticated. This may include forwarding an authentication number depending on system configuration, which could then be accessed by other company devices trying to authenticate themselves.

If the recently supplied token list meets the predetermined requirements (ie 3 matching tokens), then the server 11 sets up the conference call (119; 7). If the threshold is not meet, a denial of service message is sent (120; 7), which may include the option for supplying the standard username and password authentication.

The above method can be enhanced in a number of ways. For example the requested data (which may be the conference call log-on details for example, or a secret company document) is encrypted before delivery from the server to the user device. The key for this data may then be sent via a different channel, for example if the document is requested and/or sent over the company IP WLAN, then the key may be sent via SMS, or possibly over the same IP WLAN but using a different application such as email.

In another enhancement, in addition to checking the tokens sent by the user device 10, the server may check its physical location to determine whether it is in or near company premises for example. This may be achieved in a number of ways as would be appreciated by those skilled in the art, for example if the device has cellular wireless capability (eg GSM) then its current cell ID may be queried through an appropriate API with the cellular provider's database (HLR). In another alternative, the device may have GPS capability and signal its current co-ordinates to the server.

In a further enhancement, the tokens required for authentication may depend on the level of security required for the requested service. For example general access to the company Intranet may require a relatively low level of security, whereas access to a restricted document may require a high level. By appreciating how close the user device is to the other devices from which tokens have been gathered, an appropriate level of security may be applied. For example Bluetooth is normally only operable over a range of 10m ensuring close proximity between the user device and the other devices, whereas WiFi has a range up to 100m. Whether a token has been obtained by a "high security" wireless access technology (eg Bluetooth) or not can be indicated by tagging the appropriate token, for example including in the token information the wireless connection type used to gather it. This can then be used by the server to decide whether this token matches the predetermined requirements, for example 5 company device SIM data each obtained using Bluetooth.

The skilled person will recognise that the above-described apparatus and methods may be embodied as processor control code, for example on a carrier medium such as a disk, CD- or DVD-ROM, programmed memory such as read only memory (Firmware), or on a data carrier such as an optical or electrical signal carrier. For many applications embodiments of the invention will be implemented on a DSP (Digital Signal Processor), ASIC (Application Specific Integrated Circuit) or FPGA (Field Programmable Gate Array). Thus the code may comprise conventional programme code or microcode or, for example code for setting up or controlling an ASIC or FPGA. The code may also comprise code for dynamically configuring reconfigurable apparatus such as re-programmable logic gate arrays. Similarly the code may comprise code for a hardware description language such as Verilog ^{TM} or VHDL (Very high speed integrated circuit Hardware Description Language). As the skilled person will appreciate, the code may be distributed between a plurality of coupled components in communication with one another. Where appropriate, the embodiments may also be implemented using code running on a field-(re)programmable analogue array or similar device in order to configure analogue hardware.

The skilled person will also appreciate that the various embodiments and specific features described with respect to them could be freely combined with the other embodiments or their specifically described features in general accordance with the above teaching. The skilled person will also recognise that various alterations and modifications can be made to specific examples described without departing from the scope of the appended claims.

## Claims

1. A method of authenticating a wireless user device, the method comprising:
gathering tokens from a number of other wireless devices using wireless communication between the user device and the other devices;
determining whether said tokens match a number of predetermined authentication tokens;
authenticating said user device.

2. A method according to claim 1 wherein the wireless communication comprises using one or more wireless access technologies to directly communicate with one or more of said other devices in order to obtain said respective token.

3. A method according to claim 2 wherein one or more said wireless access technologies are used to communicate with said other devices having said wireless access technology capability within the respective ranges of said user device.

4. A method according to any preceding claim wherein a said token comprises information corresponding to one of the following group: a MAC address for the other device; SIM data for the other device; a unique group identifier for the other device; a combination.

5. A method according to any preceding claim wherein the wireless communication comprises one of the following group: IEEE802.11a; IEEE802.11b; IEEE802.11 g; Bluetooth; a combination.

6. A method according to any preceding claim wherein the authentication tokens correspond to a predetermined grouping of other devices.

7. A method according to claim 6 wherein the grouping comprises one of the following: devices having a company identifier; devices using a predetermined wireless network; devices using or requesting a predetermined service; a combination.

8. A method according to any preceding claim wherein the matching comprises determining whether other device identifiers associated with the gathered tokens match a corresponding number of device identifiers associated with the authentication tokens.

9. A method according to any preceding claim further comprising forwarding to the user device an encrypted resource using one wireless channel and a key for the encrypted resource using another wireless channel.

10. A method according to claim 9 wherein the first wireless channel is WiFi and the second wireless channel is SMS.

11. A method according to any preceding claim wherein said tokens comprise the wireless communications technology used to gather each respective token.

12. A method according to any preceding claim further comprising determining whether a service requested by the user device and corresponding to the authentication method is the same as that requested by or being used by the other devices from which tokens have been gathered.

13. A method according to any preceding claim wherein the user device communicates the tokens using a wireless network to a server for said determining and authenticating in response to an authentication challenge from the server, and wherein the tokens are from other devices also using said wireless network.

14. A method of authenticating a wireless user device, the method comprising:
receiving an authentication challenge from a server;
gathering tokens from other wireless devices using wireless communication with the other devices;
forwarding said tokens to said server in response to said challenge.

15. A method of authenticating a wireless user device, the method comprising:
sending an authentication challenge to the user device;
receiving tokens associated with a number of other wireless devices from the user device in response to the challenge;
determining whether said tokens match a number of predetermined authentication tokens;
authenticating said user device.

16. Processor control code which when executed on a processor is arranged to cause the processor to carry out the method according to any one of claims 1 to 15.

17. A system for authenticating a wireless user device, the system comprising:
means for gathering tokens from a number of other wireless devices using wireless communication between the user device and the other devices;
means for determining whether said tokens match a number of predetermined authentication tokens;
means for authenticating said user device.

18. A wireless user device comprising:
means for receiving an authentication challenge from a server;
means for gathering tokens from other wireless devices using wireless communication with the other devices;
means for forwarding said tokens to said server in response to said challenge.

19. A server for authenticating a wireless user device, the server comprising:
means for sending an authentication challenge to the user device;
means for receiving tokens associated with a number of other wireless devices from the user device in response to the challenge;
means for determining whether said tokens match a number of predetermined authentication tokens;
means for authenticating said user device.
